(19) Europäisches Patentamt
European Patent Office
Office européen des brevets

(11) **EP 3 556 160 B1**

(12) **EUROPEAN PATENT SPECIFICATION**

(45) Date of publication and mention of the grant of the patent:
**22.09.2021 Bulletin 2021/38**

(51) Int Cl.:
*H04W 72/04* (2009.01)    *H04B 7/0452* (2017.01)
*H04W 74/08* (2009.01)

(21) Application number: **17880615.4**

(86) International application number:
**PCT/CN2017/114981**

(22) Date of filing: **07.12.2017**

(87) International publication number:
**WO 2018/108020 (21.06.2018 Gazette 2018/25)**

(54) **METHODS AND APPARATUSES FOR DATA TRANSMISSION WITH BEAMFORMING IN A WIRELESS COMMUNICATION SYSTEM**

VERFAHREN UND VORRICHTUNGEN ZUR DATENÜBERTRAGUNG MIT STRAHLFORMUNG IN EINEM DRAHTLOSKOMMUNIKATIONSSYSTEM

PROCÉDÉS ET APPAREILS DE TRANSMISSION DE DONNÉES AVEC FORMATION DE FAISCEAU DANS UN SYSTÈME DE COMMUNICATION SANS-FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2016 PCT/CN2016/109901**

(43) Date of publication of application:
**23.10.2019 Bulletin 2019/43**

(73) Proprietor: **Telefonaktiebolaget LM Ericsson (publ)**
**164 83 Stockholm (SE)**

(72) Inventors:
• **LI, Yunxi**
**175 50 Jarfalla (SE)**
• **GAO, Shiwei**
**Nepean, Ontario K2JOH5 (CA)**
• **LU, Qianxi**
**Beijing 100102 (CN)**

(74) Representative: **Ericsson**
**Patent Development**
**Torshamnsgatan 21-23**
**164 80 Stockholm (SE)**

(56) References cited:
**EP-A1- 2 887 560      WO-A1-2013/043617**
**WO-A1-2015/170866      CN-A- 105 684 547**
**US-A1- 2009 046 653      US-A1- 2016 278 065**
**US-A1- 2016 278 065**

# EP 3 556 160 B1

## Description

### TECHNICAL FIELD

The non-limiting and example embodiments of the present disclosure generally relate to the technical field of wireless communications, and specifically to methods, apparatuses and computer programs for data transmission with beamforming.

### BACKGROUND

This section introduces aspects that may facilitate better understanding of the disclosure. Accordingly, the statements of this section are to be read in this light and are not to be understood as admissions about what is in the prior art or what is not in the prior art.

With the evolution of wireless communication, a requirement for supporting device to device (D2D) communication (also referred to as "side-link," "sidelink," or "SL") features which targets at both commercial and Public Safety applications has been proposed. In the Third Generation Partnership Project (3GPP), the D2D communication feature has been introduced during the development of Release 12 (Rel-12) of the Long Term Evolution (LTE) standard. Some applications enabled by Rel-12 LTE include device discovery and proximity-based service (ProSe). With device discovery, devices are enabled to sense the proximity of another device and an associated application by broadcasting and/or detecting discovery messages that carry an identity of a device and/or an application. Another application provides direct communication based on physical channels terminated directly between devices.

In 3GPP LTE Rel-14, an extension for the D2D work consists of supporting Vehicle-to-X (V2X) communication, which includes direct communication among vehicles, pedestrians and infrastructure, for example, vehicle to vehicle (V2V), vehicle to pedestrians (V2P) and vehicle to infrastructure (V2I). V2X communications may carry both non-safety and safety information, where each of applications and services may be associated with a specific set of requirements, e.g., in terms of latency, reliability, capacity, etc.

V2X communication may take advantage of a network (NW) infrastructure, when available, but at least basic V2X connectivity should be possible even in the case of lacking network coverage. A network-based, for example LTE-based, V2X interface may be economically advantageous because of the LTE economies of scale and capability of tighter integration between communications with LTE NW infrastructure and V2X communications, as compared to using a dedicated V2X technology.

EP2887560 discloses how V2X communication data are transmitted by beam forming to their destination.

Currently, how to integrate the V2X communication with the NW infrastructure is still an open problem.

### SUMMARY

The invention provides for a method performed by a network device per claim 1 and the corresponding apparatus in a network device per claim 11. Further embodiments of the invention are defined by the dependent claims. Other features and advantages of embodiments of the present disclosure will also be understood from the following description of specific embodiments when read in conjunction with the accompanying drawings, which illustrate, by way of example, the principles of embodiments of the present disclosure.

According to the various aspects and embodiments as mentioned above, data, for example V2X data, can be transmitted to a target area efficiently.

### BRIEF DESCRIPTION OF THE DRAWINGS

The above and other aspects, features, and benefits of various embodiments of the present disclosure will become more fully apparent from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:

FIG. 1 illustrates a schematic D2D communication scenario, in which embodiments of the present disclosure may be implemented;
FIGs. 2-4 illustrate different types and roadside unit;
FIG. 5 illustrates a broadcast service provided by a network device;
FIG. 6 illustrates an architecture for V2X message delivery through MBMS;
FIG. 7 illustrates a concept of beamforming with N antennas and beamforming weights;
FIG. 8 illustrates transmission structure of precoded spatial multiplexing mode in LTE;

FIG. 9 illustrates an example of Geographical area based broadcast;

FIG. 10 illustrates another example of Geographical area based broadcast;

FIG. 11 illustrates an example of broadcast via a SCPTM scheme;

FIG. 12 illustrates a flowchart of a method implemented at a network device according to an embodiment of the present disclosure;

FIG. 13 illustrates an example of Geographical area based according to an embodiment of the present disclosure;

FIG. 14 illustrates another example of Geographical area based according to an embodiment of the present disclosure;

FIG. 15 illustrates a flowchart of another method implemented at a network device according to an embodiment of the present disclosure;

FIG. 16 illustrates an example of determining beamforming area based on assistance information according to an embodiment of the present disclosure;

FIG. 17 illustrates another example of determining beamforming area based on assistance information according to an embodiment of the present disclosure;

FIG. 18 illustrates a flowchart of a method for determining beamforming parameter for a target area according to an embodiment of the present disclosure;

FIG. 19 illustrates an example of determining beamforming parameter for a target area according to an embodiment of the present disclosure;

FIG. 20 illustrates an example of beamforming-based transmission according to an embodiment of the present disclosure;

FIG. 21 illustrates a flowchart of still another method implemented at a network device according to an embodiment of the present disclosure;

FIG. 22 illustrates a simplified block diagram of an apparatus implemented in/as a a network device according to an embodiment of the present disclosure; and

FIG. 23 illustrates simplified block diagrams of an apparatus in a network device according to an embodiment of the present disclosure.

## DETAILED DESCRIPTION

References in the specification to "one embodiment," "an embodiment," "an example embodiment," etc. indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be liming of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

As used herein, the phrase "wireless communication system" or "wireless communication network" refers to a network following any suitable wireless communication standards, such as LTE-Advanced (LTE-A), LTE, Wideband Code Division Multiple Access (WCDMA), High-Speed Packet Access (HSPA), and so on. Furthermore, the communications between network devices or between a network device and a terminal device in the wireless communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future.

As used herein, the phrase "network device" refers to a device in a wireless communication network via which a terminal device accesses the network and receives services therefrom. The network device may refer to a base station (BS), a node B (NodeB or NB), an evolved NodeB (eNodeB or eNB), a Remote Radio Unit (RRU), a radio head (RH), a remote radio head (RRH), a TRP (Transmission Reception Point), AN(access Node), a relay node (RN), or a low power node (LPN) such as a femto, a pico, an access point (AP) and so forth, depending on the applied terminology and technology.

The phrase "terminal device" refers to any end device having wireless communication capabilities. By way of example and not limitation, a terminal device may be referred to as user equipment (UE), which may be a Subscriber Station (SS), a Portable Subscriber Station, a Mobile Station (MS), an Access Terminal (AT), or a vehicle. The terminal device may include, but not limited to, mobile phones, cellular phones, smart phones, or personal digital assistants (PDAs), portable computers, image capture terminal devices such as digital cameras, gaming terminal devices, music storage and playback appliances, wearable terminal devices, vehicle-mounted wireless terminal devices and the like. In the following description, the phrases "terminal device", "terminal", "user equipment", and "UE" may be used interchangeably.

For illustrative purposes, several embodiments of the present disclosure will be described in the context of a 3GPP LTE (e.g., Release 14) system. Those skilled in the art will appreciate, however, that the concept and principle of embodiments of the present disclosure may be more generally applicable to other wireless networks, for example 3G CDMA-based network or a 5G or New Radio (NR) system.

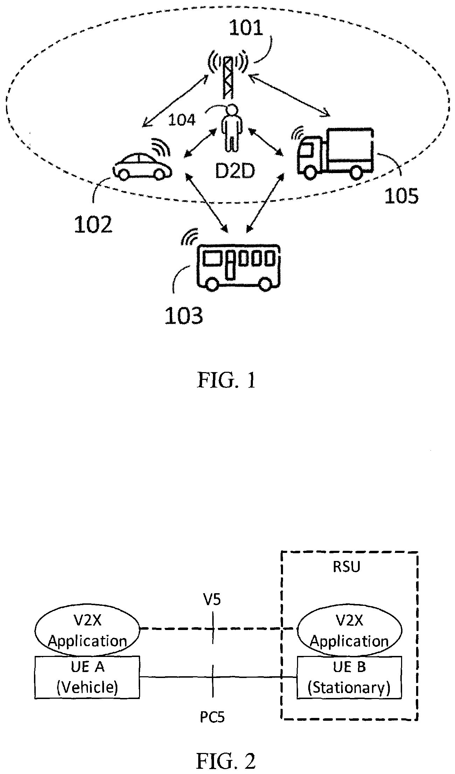

FIG. 1 illustrates schematically a wireless communication system in which embodiments of the present disclosure may be implemented. As shown in FIG. 1, the wireless communication system 100 may include one or more network devices, for example network device 101, which may be in a form of an eNB. It would be appreciated that the network device 101 could also be in a form of a Node B, BTS (Base Transceiver Station), and/or BSS (Base Station Subsystem), AP and the like. The network device 101 may provide radio connectivity to a set of terminal devices, for example terminal devices 102 to 105, within coverage of its cell. A terminal device (e.g., terminal device 102) may access the wireless communication system via the network device 101, or communicate with another terminal device (e.g., terminal device 105 or 103) directly via D2D (also referred to as sidelink, SL or Prose).

Sidelink transmissions over a so-called PC5 interface have been standardized in 3GPP since LTE Release 12 (also referred to as Rel-12). In 3GPP Rel-12, two different D2D operation modes have been specified. In a first mode (also referred to as "mode-1"), a UE in a RRC_CONNECTED mode can request D2D resource from the network, and an eNB may grant a D2D resource to the UE via a physical layer signaling in a format of physical downlink control channel (PDCCH) downlink control indicator format 5 (DCI5) or via a dedicated higher layer signalling. In a second mode (also referred to as "mode-2"), a UE can autonomously select a D2D resource for transmission from a pool of available resources that is provided by the eNB via a broadcasted system information block (SIB) signalling or via a dedicated signaling. Unlike the first operation mode (mode-1), the second operation mode (mode-2) can be implemented also by UEs in a RRC_IDLE state.

In LTE Rel-12, physical layer design for the sidelink has been based on assumptions of few amount of UEs competing for physical resources, voice packet for MCPTT traffic, and low-mobility of the terminal device. However, when usage of the sidelink is extended to the V2X domain In Rel.14, these assumptions do not hold any more. In a V2X scenario, the sidelink should be able to cope with higher load (e.g., potentially, there can be hundreds of cars contending for physical resources), carry time/event triggered V2X messages (e.g., Cooperative Awareness Message (CAM), Decentralized Environmental Notification Message, (DENM)), and support UEs with high mobility. For such reasons, potential enhancements to the physical layer of the sidelink have been discussed in 3GPP. In particular, two new D2D operation modes have been introduced in Rel-14, which include a third mode (also referred to as "mode-3") and a fourth mode (also referred to as "mode-4"). The mode-3 supports semi-persistent scheduling (SPS) of the sidelink besides a dynamic sidelink grant (i.e., in the same manner as that of mode-1), and the mode-4 supports an autonomous resource selection with some enhancements. In addition, enhancements to higher layers are also considered, which include the enhancements to the SPS protocol, and introduction of a zoning mechanism. The zoning mechanism is a scheme which allows the eNB to create different zones of different shapes within a cell and assign transmission pools to respective zones.

Though for illustration purpose, some embodiments will be described in a V2X background, it should be appreciated that embodiments of the present disclosure are not limited to such a specific scenario, but are applicable to other scenarios where similar problems exist.

To facilitate a better understanding of the present disclosure, some related techniques will be described first in the following.

## 1. Roadside unit

A roadside unit (RSU) is defined as an entity supporting V2I service, that is, an entity that is capable of transmitting to, and/or receiving from a V2X UE using a V2I application. Typical V2I use cases include, for example, emergency stop warnings, queue warning, automated parking systems etc. In all such cases, V2X UE reports updates to the RSU which in turn disseminates such information in a larger area or to a specific group of interested V2X UEs. The V2X UE supporting V2I applications may send application layer information to the RSU and the RSU may send application layer information to a group of UEs or a UE supporting V2I applications, without necessarily propagating such information to the core network. For this reason, the RSU is tailored to disseminate local information in a relatively small area, e.g. traffic intersections, parking areas etc.

RSU functionalities may be implemented either in a network device (e.g., an eNB, and in this case the RSU may be called as an eNB-type RSU) or in a terminal device (e.g., UE, and in this case the RSU may be called as an UE-type RSU). From layer 1 (i.e., physical layer) and layer 2 (i.e. media access control (MAC) layer or, Packet Data Convergence Protocol (PDCP) layer) perspective, the functionalities of an eNB-type RSU and an UE-type RSU are different. An eNB-type RSU communicates with a terminal device over a Uu interface. It is connected to the network via an S1 interfaces and is connected to any other legacy eNB via an X2 interface. In contrast, an UE-type RSU has a sidelink and PC5 interface towards UEs (as in D2D communications, e.g. 3GPP Rel.12 ProSe) and possibly communicates with an eNB via a Uu interface. However, from an application layer perspective, both the UE-type RSU and the eNB-type RSU should support V2I use cases.

Some different implementations of the RSU with different functionalities and interfaces are shown in Figs. 2-4, and more details of these implementations may be found, for example, in 3GPP TR 23.785 V14.0.0 "Study on architecture enhancements for LTE support of V2X services," the content of which is incorporated herein by reference.

An RSU can also be used for V2V applications, e.g. pre-crash warnings, cruise control, for extending coverage and propagate V2V information, or the RSU may be used for V2N applications in which case the RSU will propagate V2N message to the core network where a centralized V2X server will collect data from a macro area.

## 2. Broadcast

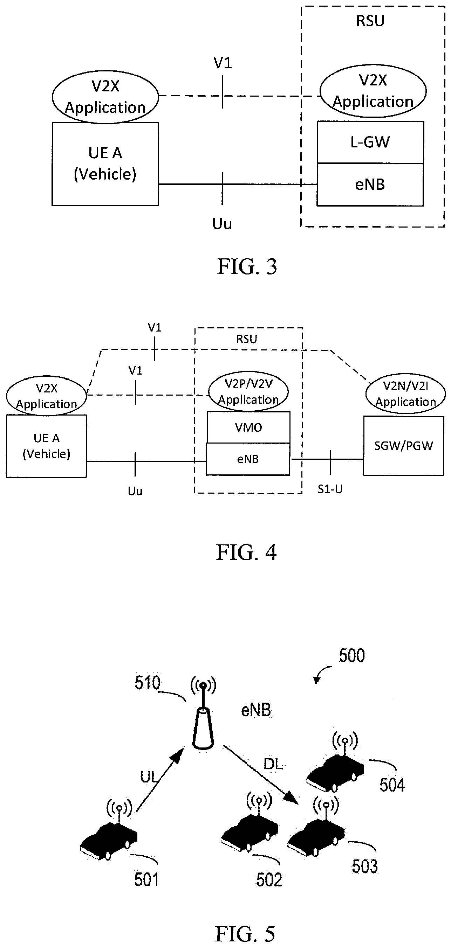

In a V2X scenario, Multimedia Broadcast Multicast Service (MBMS), Multicast Broadcast Single Frequency Network (MBSFN), or single cell point to multi-points (SCPTM) may be considered to support broadcast service, e.g. to support a scenario shown in FIG. 5. In the example scenario shown in FIG. 5, the eNB 510 broadcasts, in DL, a message to all V2X UEs (501-504) in its coverage via MBMS.

For V2X services, a broadcast mechanism is more suitable for transmitting a message to V2X UEs where a message transmitted by a V2X UE should be received by all other V2X UEs in its proximity. Three types of broadcast may be considered which include MBMS based broadcast, SCPTM based broadcast and eNB based broadcast. For a MBMS or SCPTM based broadcast scheme, the message from a terminal device, e.g. a V2X UE, needs to travel to a server and then come to the serving eNB of the terminal device and neighbor eNBs, and then transmit to terminal devices (e.g.,V2X UEs). For an eNB based broadcast scheme, the eNB that receives a message from a terminal device (e.g., a V2X UE) will share the message with its neighbors using an X2 interface and then the message is broadcasted by the eNBs to cover desired areas; in other cases, the eNB receives a message from some application server and broadcasts it to a desired area.

## 3. MBMS for V2X

V2X messages can be delivered via MBMS, as described in 3GPP TR 36.885 V14.0.0 "Study on LTE-based V2X Services." In addition, the V2X messages need to be broadcasted in the vicinity of the originating V2X UE. The originating V2X UE may send its V2X messages over an application layer to a V2X server. The messages may include information on a geo-location (e.g., latitude and longitude) of the V2X UE. The V2X UE may also provide cell-related information in a V2X message.

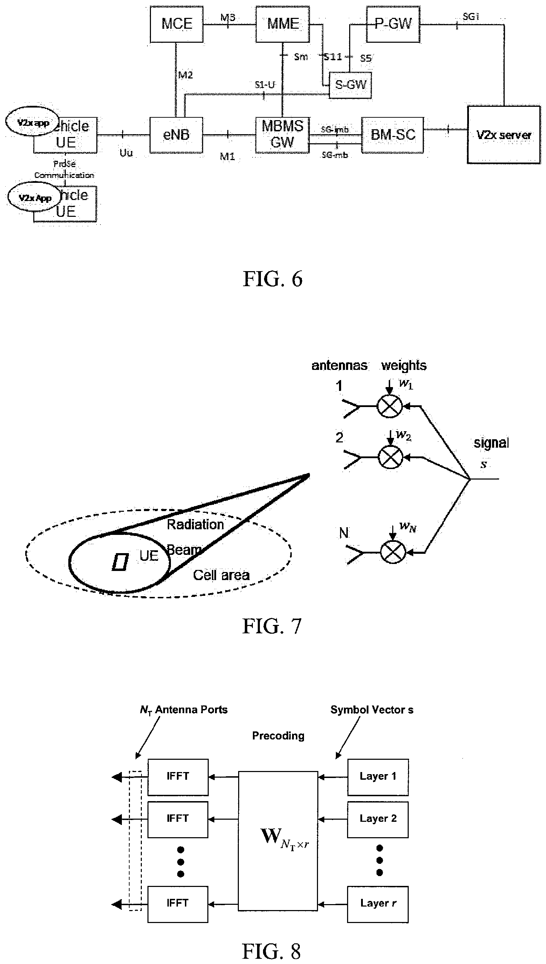

In a similar but simpler scenario, V2X messages are generated e.g. in the V2X server or in road sensors, and distributed to V2X UEs. In this case, there is no need to take into account position of the originating V2X UE when distributing the messages and the messages can be delivered using MBSFN or SC-PTM (or even unicast if feasible). This latter case seems less challenging. An architecture shown in FIG. 6 may be used for delivery of V2X messages via MBMS.

In 3GPP TR 36.885 V14.0.0 "Study on LTE-based V2X Services," the following three options have been considered regarding how to support small and variable areas in a V2X scenario:

> Option 1: Solution with new ID to differentiate flows with the same TMGI;
> Option 2: Solution to use non-overlapped MBMS Service Areas;
> Option 3: User plane enhancement solution.

In addition, a fourth option is also considered:
Option 4: Different TMGIs to the MBMS Service Areas when there is an overlap, in order to be able to transmit different V2X messages in the MBMS Service Areas with overlap.

#### 4. UE Location Reporting

It has been agreed in 3GPP that V2X UEs periodically report their geo-location to its serving eNB, details may be found, for example from 3GPP R2-167240 "Report from LTE Break-Out Session (V2V, V2X, FeD2D, LATRED)," 3GPP TSG-RAN WG2 Meeting #95 Kaohsiung, 10th - 14th October 2016."

- Location reporting triggers are based on periodic reporting. For the reporting interval, the current value ranges used for periodical measurement reporting from 120ms to 1 hour can be used.
- RRC messaging, MeasurementReport, will be used for location reporting. The existing IE LocationInfo will be used.

In this way, the eNB can track the location of all V2X UEs that are operating in a D2D mode 3.

#### 5. Beamforming and MIMO in LTE

Multi-antenna techniques can significantly increase data rates and reliability of a wireless communication system. The performance is in particular improved if both the transmitter and the receiver are equipped with multiple antennas, which results in a multiple-input multiple-output (MIMO) communication channel. Such systems and/or related techniques are commonly referred to as MIMO. When a single receive antenna is used at a UE and multiple transmit antennas are used at a network device, the system is referred to as multiple input and single output (MISO) system.

A core component in LTE is to support MIMO antenna deployments and MIMO related techniques. In LTE, each antenna at the base station is associated with an antenna port. The number of antenna ports supported in LTE release 14 includes 2, 4, 8, 12, 16, 20, 24, and 32. Each antenna port has typically an antenna radiation pattern that defines a cell, or in other words, has a cell wide coverage. When a signal is transmitted from only one of the antenna ports, it may reach UEs anywhere in the cell. On the other hand, when a signal is transmitted on all the available antenna ports, it may only reach UEs in certain direction as illustrated in FIG. 7, where $w = [w_1, w_2, ... ,w_N]^T$ is called a precoding vector or a beamforming vector, wherein $(.)^T$ denotes transpose. This approach of signal transmission over multiple antennas is also called beamforming as it is equivalent to form a narrow beam toward a certain direction, and accordingly $w$ is known as beamforming weights. Different values of $w$ may be used to form/generate different beams.

An antenna port is visible to a UE through a unique reference signal transmitted over the antenna port. LTE supports up to 8 layers spatial multiplexing with channel dependent precoding. The spatial multiplexing transmission mode aims for high data rates in favorable channel conditions. An illustration of the spatial multiplexing operation is provided in FIG. 8.

As can be seen, the information carrying symbol vector $s = [s_1, s_2, ..., s_r]^T$ is multiplied by an $N_T$ by r precoder matrix $W$, where each column of $W$ is a precoder associated with one data layer or data stream, and forms a beam for the data layer. Thus the number of spatially multiplexed layers, or the transmission rank, is reflected in the number of columns of the precoder matrix $W$. An Inverse Fast Fourier Transform (IFFT) operation may be used to map each of the precoded symbols to a subcarrier in the frequency domain as part of the OFDM operation before the signal being transmitted. Spatial multiplexing is thus achieved since multiple data streams can be transmitted simultaneously over a same time/frequency resource.

The precoder matrix is often chosen to match characteristics of the $N_R$ by $N_T$ channel matrix $H_n$ between an eNB and a UE, resulting in so-called channel dependent precoding. The $(i,j)^{th}$ element of $H_n$ corresponds to the channel between the $i^{th}$ receive antenna at the UE and the $j^{th}$ transmit antenna at the eNB. This is also commonly referred to as closed-loop precoding and essentially strives to focus the transmit energy into a subspace which is strong in the sense of conveying much of the transmitted energy to the UE. In addition, the precoder matrix may also be selected to strive for orthogonalizing the channels for different layers if more than one layer is available in $H_n$, which means that after proper linear equalization at the UE, the inter-layer interference may be reduced. The number of layers available for transmission depends on the rank of $H_n$ and also depends on the noise and interference experienced at the UE.

The precoder matrix is typically reported by a UE through a precoder matrix indicator (PMI) as part of a channel state information (CSI) feedback, together with a rank indicator (RI) and a channel quality indicator (CQI). The PMI specifies a precoder matrix in a codebook for a given rank r and number of transmit antenna ports $N_T$. Typically, a UE estimates the channel matrix $H_n$ based on received downlink reference signals, either cell specific reference signals (CRS) or CSI reference signals (CSI-RS) and then looks up in the codebook to find the best matching precoder matrix. A distinct CRS or CSI-RS is transmitted on each antenna port so that $H_n$ can be estimated at a UE.

The channel matrix $H_n$ is closely related to the location of a UE with respect to the eNB and the surrounding environment of the UE and the eNB. In TDD systems with calibrated antennas, the channel matrix $H_n$ and thus the precoder matrix can also be estimated based on the uplink sounding reference signals (SRS) received by the eNB.

The precoder matrix $W$ for 4 to 32 antenna ports has a structure as follows

$$W = W_1 W_2 \qquad\qquad (1)$$

where $W_1 = \begin{bmatrix} D & 0 \\ 0 & D \end{bmatrix}$ contains a group of $L$ beams that cover a UE, $D = [d_1 \,...\, d_L]$,

$d_k = \left[ 1, e^{j2\pi\frac{k}{QM}}, ..., e^{j2\pi\frac{k(M-1)}{QM}} \right]^T$ ($k$ = 1, ..., $L$) is a Discrete Fourier Transform (DFT) beamforming vector, $M$ = $N_T/2$ is the number of antenna ports with the same polarization and $N_T$ is the total number of antenna ports in which a half of the ports has one polarization and the other half has a different polarization, Q is an oversampling factor used to determine the granularity of the beams. For rank 1, $W_2 = \begin{bmatrix} e_i \\ \varphi_n e_i \end{bmatrix}$, which is used to select one beam from the beam group and provides the co-phasing factor between the two polarizations, and $e_i$ is a $Lx1$ vector with the ith element equal to one and the rest equal to zero and $\varphi_n = e^{j2\pi\frac{n}{M_p}}$, $n$ = 0,1, ..., $M_p$ - 1 and $M_p \in \{4,8\}$. $W_1$ is for wideband while $W_2$ is per subband. So $W_1$ reflects the angular information of a UE, which changes slowly, while $W_2$ reflects more of the local environment surrounding the UE, which can change quickly.

It has been observed that in a V2X scenario, information contained in a V2X message may be useful only to V2X UEs in a specific area. That is, a V2X message may need to be sent to V2X UEs in a certain geographical area. For example, a network device may need to broadcast information to and only to all V2X UEs in a certain geographical area.

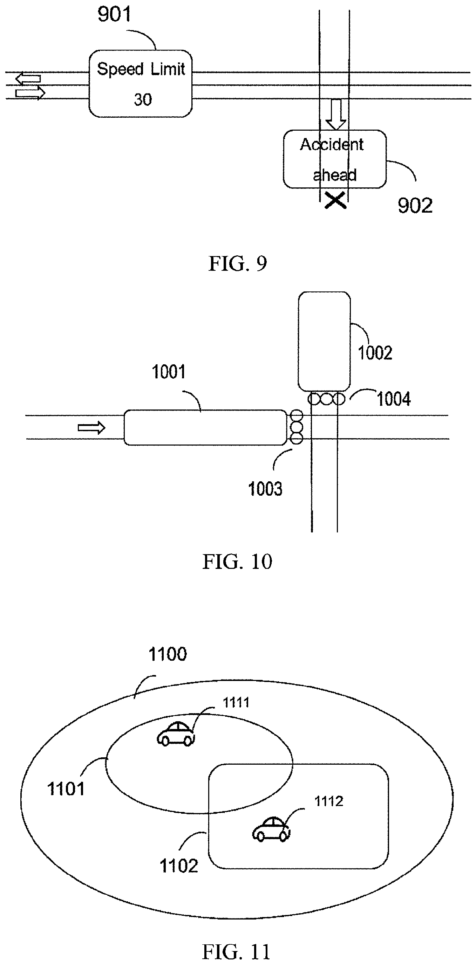

The observations are illustrated in FIG. 9. As shown in FIG. 9, there is construction ongoing in area 901, and as a result, the vehicle speed in the area 901 should not exceed 30 km/h, while in area 902, all V2X UEs should receive a warning that there is an accident ahead. The message (i.e., information on the speed limitation) targeting at area 901 should not be transmitted to vehicles in area 902, and vice versa.

Another example of the observations is illustrated in FIG. 10 which shows an intersection scenario. Traffic light 1003 and 1004 are used for controlling the traffic from Area 1001 and Area 1002 respectively. At a specific point in time, a red light is on at traffic light 1003, and green is on at traffic light 1004. Accordingly, the vehicles in area 1001 should receive a message 1 indicating "Red is on ahead", while the vehicles in area 1002 should receive a message 2 indicating "green is on ahead." If the message 1 is received by vehicles in area 1002, or the message 2 is received by vehicles in area 1001, the drivers may take a wrong action which may cause an accident.

There could be different solutions to these problems. The solutions may be unicast based or broadcast (e.g., SCPTM or MBMS) based. These solutions are analyzed below.

**Unicast based solution**

Unicast can be used to support a geographical area based broadcasting. In particular, the possible procedure may be:

- all V2X UEs detect their own positions all the time, and report to their serving eNB;
- The eNB compares the position of a V2X UE and the concerned area, and decides whether to transmit data to this UE or not. If the eNB decides to transmit to the UE, it will transmit the data to that UE via LTE DL. Some additional signaling will be needed between the eNB and the UEs to enable such selective transmission to interested UEs.

For example, to enable this, all V2X UEs must always track their positions and report to the serving eNB, and all UEs must be in a connected mode which consumes a lot of radio signaling and UE power.

**Broadcast by SCPTM**

SCPTM may be used to support the geographical area based broadcasting. However, it will be difficult to use the SCPTM based solution if the geographical area is smaller than a cell. A Problem is illustrated in FIG. 11. As shown in FIG. 11, there may be two separate areas 1101 and 1102 within a cell 1100 to which different data are to be broadcasted. To support the geographical area based broadcasting, data and its associated area information must be transmitted within the whole cell. Some additional service identification, e.g. TMGI, may be used to differentiate different receivers. V2X UEs (e.g., 1111 and 1112) will receive the associated area information together with a service identification. Due to the fact that the target geographical area is rather small and may change over time, it is infeasible to allocate an unique service identification to each target area which may change over the time, since it will need a lot of service identifications and consume a lot of radio signing to update association information between a service identification and a target area. In practice, the data targeting different target areas must be transmitted together. Information on the target area (e.g., an identification of the target area) must be transmitted to the V2X UE as well. The V2X UE has to receive all the data and filter out interested information by matching its current geo-location information and target area information received.

In the example shown in FIG. 11, from V2X service perspective, Data 1 and Data 2 are to be transmitted to V2X UEs located in Area 1101 and Area 1102 respectively, and the SCPTM based solution may be implemented as below:

- eNB broadcasts information { geo-location information of Area 1101, Data 1}, { geo-location information of Area 1102, Data 2}. Note that service identification is not shown to make it simple.
- at V2X UE 1111 side, the following operations will be performed:

  - receiving information from eNB;
  - determining its geo-location and comparing with geo-location information received; and
  - delivering Data 1 to higher layer, and dropping Data 2.

The above solution will reduce system capacity when there are multiple "target areas" in the cell, and will consume much more power of UEs. Also, it will request all V2X UEs to support the SCPTM feature which is not essential for a UE at all.

Another alternative solution is to perform further cell splitting, which however has a disadvantage of extra cost on network hardware deployment. In addition, it cannot support the case that the corresponding broadcasting area may change dynamically.

## Broadcast by MBMS

MBMS may be used to support the geographical area based broadcasting. However, the V2X data and its corresponding broadcasting area may change dynamically, and therefore, to support such broadcast function, the network needs to adjust MBMS service area to match the concerned geographical area exactly and timely, which is not always possible.

In some cases, the target geographical area of the broadcast is rather small, which means that the MBMS service area has to be defined to be very small, even one or more MBMS areas per cell. In this case, there will be a similar problem as that discussed with reference to the SCPTM based solution. In addition, to use the MBMS based solution, it is necessary for V2X UE to support the MBMS feature which is not necessary for a V2X UE at all.

To solve at least part of the above problems, methods, apparatuses and computer programs have been proposed in the present disclosure. According to embodiments of the present disclosure, a network device may dynamically determine a target area for transmitting specific data (e.g., a V2X message), and deliver the data to the determined target area efficiently with beamforming. Since the data is only delivered to the determined target area, interference to other areas is reduced or avoided. In addition, with embodiments of the present disclosure, it is unnecessary to indicate, to the V2X UEs, an identity of the target area together with the data, and therefore signaling overhead may be reduced.

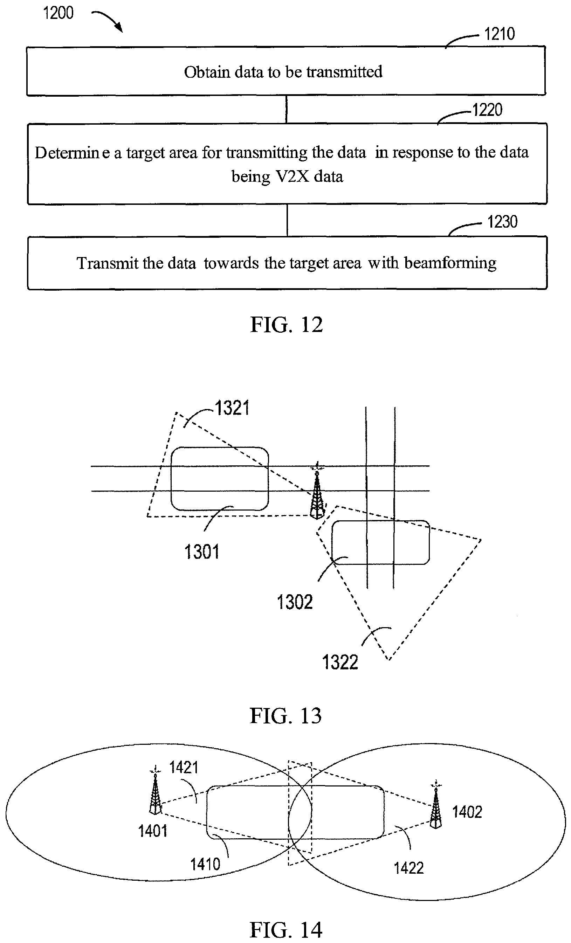

Reference is now made to FIG. 12, which shows a flowchart of a method 1200 according to an embodiment of the present disclosure. The method 1200 may be performed in a network device, e.g., the network device 101 shown in FIG. 1. However, it is to be understood that the method 1200 may also be performed by any other suitable network devices.

As shown in FIG. 12, at block 1210, the network device, e.g. network device 101, obtains data to be transmitted. As one example, the data may be a V2X message, however, it should be appreciated that embodiments are not limited thereto. In some embodiments, the data may be related to other applications. The data may be obtained by the network device 101 at block 1210 via various ways and/or from various sources.

In one embodiment, the network device 101 may receive the data from a terminal device via a cellular communication interface (e.g., Uu interface). The terminal device may be, for example, a UE with V2X application. For example, a vehicle/ pedestrian UE may want to transmit V2X data to the network device 101 for the network device 101 to transmit the received data to other V2X UEs in proximity or to a V2X application server. In this case, at block 1210, the network device 101 may receive the V2X data transmitted from the transmitting V2X UE via LTE UL transmission.

In another embodiment, alternatively or in addition, at block 1210, the network device may receive the data from a terminal device via a device to device communication interface (e.g., a PC5 interface). A vehicle/pedestrian UE may transmit V2X data to other V2X UEs in its proximity via PC5. Since the resources being used by the transmitting UE is configured by the network device 101, the network device may monitor the transmission of the UE using the concerned resources and decode the data being transmitted. This implementation requires the network device to have a capability for receiving via PC5 interface.

In still another embodiment, alternatively or in addition, at block 1210, the network device 101 may receive the data from a network node for broadcast control, for example a MBMS gateway (MBMS-GW). The V2X data can be transmitted from the MBMS-GW following the MBMS/MBSFN/SCPTM procedure defined in 3GPP TR 36.885 V14.0.0 "Study on LTE-based V2X Services." Note that the MBMS data received by the network device 101 from MBMS-GW may include both V2X and non-V2X data, and the network device 101 may identify the V2X data for example based on an associated V2X Temporary Mobile Group Identity (TMGI).

In a further embodiment, alternatively or in addition, the network device 101 may receive the data from an application server. For example, at block 1210, the network device 101 may obtain V2X data, e.g. some infrastructure to vehicle (I2V) data, from a V2X application server.

As shown in FIG. 12, at block 1220, the network device 101 determines a target area for transmitting the data, at least based on a type of the data. The target area may also be referred to as a "beaming area," which is an area to which the data are to be transmitted, or, an area where a potential receiving UE may locate. The target area may be smaller than a cell or a sector. There may be one or more terminal devices located in the target area, and all terminal devices located in the area should receive the data. In one embodiment, the network device 101 may determine the target area for transmitting the data in response to the data being V2X data. For example, if the data is certain V2X data, then network device 101 may determine that the data is only relevant to a certain geographical area which may be a circular area with an originating V2X UE of the data as a center. In another example, if the data is determined to be a type different from V2X data, the network device 101 may determine a different target area. The network device 101 may determine the type of the data (e.g., whether it is V2X data) in various manners, for example, based on content of the data, or based on originating source of the data. For example, if the network device 101 obtains the data from a V2X server at block 1210, it may determine that it is V2X data.

At block 1230, the network device 101 transmits the data towards the target area with beamforming. That is to say, the transmission and the beamforming target an interested area (or in other words, all terminal devices within the interested area) rather than a specific terminal device. In one embodiment, the network device 101 may transmit the data towards the target area via a cellular communication interface, e.g., a Uu interface. The transmission may include broadcasting, for example, using a MBMS, MBSFN or SCPTM scheme. For example, the MBMS/MBSFN/SCPTM defined in 3GPP may be reused completely, except that beamforming based broadcast transmission is used to deliver the data to the determined target area, while in convention MBMS/MBSFN/SCPTM, a broadcast transmission is used to cover the whole cell.

In another embodiment, at block 1230, the network device 101 may transmit data towards the target area with beamforming over a D2D interface (e.g., a PC5 interface). In a V2X enabled network, the network device 101 may reserve some resources for V2X transmission, which can be either eNB scheduled or UE selected. In one example, when transmitting V2X data using beamforming at block 1230, the network device 101 may use the eNB scheduled resource.

If more than one beams (e.g., from the network device 101 and other network devices) are used to transmit the same V2X data to a certain "beaming area", all these beams may use a same resource. In another embodiment, if there is overlap between different "beam areas" for different data (from the single network device 101, or from a plurality of network devices), different resources may be used for the different "beam areas" to avoid interference. For example, in FIG. 11, different data may be transmitted to two overlapping areas respectively (i.e., Area 1101 and Area 1102 shown in FIG. 11), and different resources may be used for the transmission to Area 1101 and Area 1102 respectively. The network device 101 may use same resources for a plurality of different beaming areas as long as the plurality of beaming areas are not overlapped. For example, in FIG. 13, data targeting Area1301 and Area 1302 may be sent by the eNB 1311 with beam 1321 and beam 1322 using same resource.

If the "beaming area" spans more than one cell, all relevant eNBs may transmit in a "single frequency network" ("SFN") fashion, i.e., all the eNBs may transmit the same content at the same time - frequency resource and same modulation. One example is shown in FIG. 14, which shows that Area 1410 spans over the cell of eNB 1401 and the cell of eNB 1402. In this example, the eNB 1401 and eNB 1402 may transmit the same data using the same resources for beam 1421 and beam 1422 using method 1200.

With method 1200, different beams carrying different data can be used for the network to cover different geographical areas. In addition, the same resource can be reused by different beams covering different geographical areas.

Some implementation of the method 1200 is UE transparent, i.e. it does not require the terminal device to support any other unnecessary feature, e.g. MBMS/MBSFN or SCPTM.

In some embodiments, the method 1200 does not require the receiving UE to be in a CONNECTED mode. With some embodiments of the disclosure, when the geographical broadcasting area changes (e.g., due to transmitting new data to a new area), a beam(s) can be formed accordingly by the network device in time, without impact on cell configuration. In some embodiments, the beam can be formed to match the target broadcasting geographical area accurately regardless of a cell border.

In addition, in some embodiments of method 1200, neither the network device nor the originating V2X UE needs to know/track the geo-location of the receiving V2X UE.

In some embodiments, same time-frequency resources can be used by different beams targeting different geographical areas within one cell, and then system capacity can be increased. As shown in FIG. 13, beam 1321 can be used to cover Area 1301, while beam 1322 is used to cover Area 1302. Beam 1321 and 1322 can use the same resources.

Furthermore, the system capacity is not impacted/limited by the number of receiving V2X UEs, since the data can be broadcasted to the target area by the network device.

Additionally, compared with a conventional way of broadcasting a message to the whole cell, method 1200 provides additional beamforming gain which results in better UE coverage and/or low decoding errors, and also reduced inter-cell interference due to reduced angular coverage area.

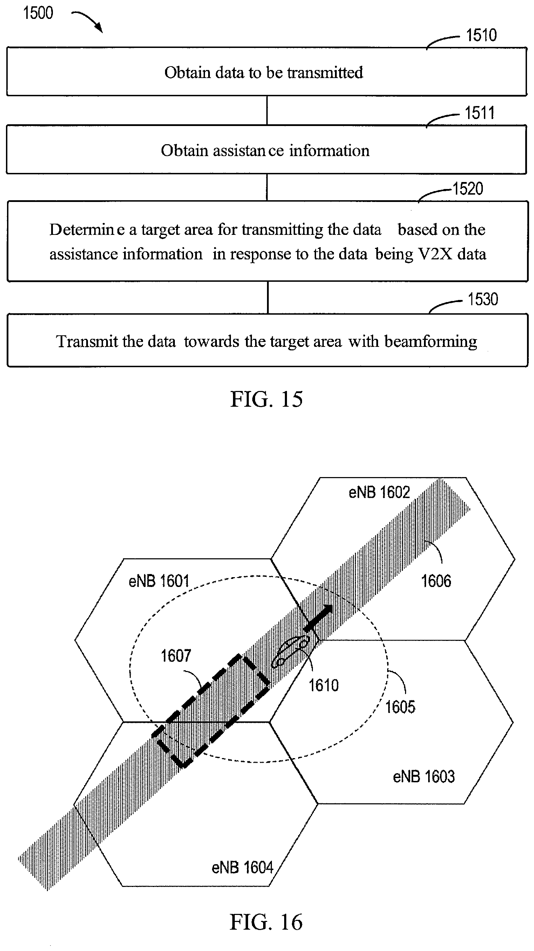

Reference is now made to FIG. 15, which shows a flow chart of another method 1500 according to an embodiment of the present disclosure. The method 1500 may be performed in a network device, e.g., the network device 101 shown in FIG. 1. However, it is to be understood that the method 1500 may also be performed by any other suitable network devices.

The operations performed at blocks 1510 and 1530 of FIG. 15 may be the same as those of blocks 1210 and 1230 of FIG. 12, and therefore details will not be repeated. At block 1511, the network device 101 further obtains assistance information. At block 1520, the network device 101 determines a target area for transmitting the data further based on the assistance information in addition to a type of the data. In one embodiment, the network device 101 may determine the target area in response to the data being V2X data.

In one embodiment, the assistance information obtained by the network device 101 at block 1511 may include, but not limited to, at least one of:

- a geo-location of a terminal device from which the data is obtained;
- a moving speed of the terminal device from which the data is obtained;
- a moving direction of the terminal device from which the data is obtained;
- a geographical area to which the data (e.g., V2X data) is to be transmitted,
- map information for a geographical area around the network device, e.g. , distribution of buildings, roads, rivers and etc. This kind of information can be obtained from a third party product (3PP) application, e.g. from Google map
- information on a network deployment around the network device, e.g., neighboring cells, cell border, etc., and
- information on content of the data. For example, some information can be included in V2X data, e.g. "Forward Collision Warning" or "Emergency Stop", from which the type of the V2X data can be determined. The network device may perform Deep packet inspection (DPI) on V2X data to obtain the needed information.

In one embodiment, the assistance information and the data may be obtained by the network device from a same source. For example, the network device 101 may obtain both V2X data and the assistance information (e.g. the target geographical area associated with V2X data) from a terminal device/GW/server. As another example, a terminal device (e.g., UE 102 shown in FIG. 1) may transmit the data and the assistance information to the network device 101 separately. For example, the UE 102 may periodically report its geo-location to eNB, and transmit V2X data to the network device 101 based on need. The network device 101 may associate the UE identification included in the location report with the UE identification included in the V2X data, so as to obtain the geo-location information of the transmitting UE. In another embodiment, the data and the assistance information may be obtained by the network device 101 via different communication interfaces. For example, the network device 101 may obtain the data via PC5 interface from the terminal device at block 1510 and obtain the assistance information via Uu interface from the terminal device at block 1511.

In another embodiment, the network device 101 may obtain the data from one source (e.g., a terminal device), while obtain the assistance information from another source (e.g., a server or GW).

The assistance information obtained at block 1511 enables the network device to determine the target area more accurately. In some embodiments, the potential receiving device of a message may only appear in some part of a geographical area, e.g. the receiving V2X UEs may only appear on a road, not in the forest aside the road or a river. In such a case, the network device 101 may utilize the assistance information to determine a smaller beamforming area. An example on how to determine beaming area for data received from a V2X UE is shown in FIG. 16. In FIG. 16, four cells are shown, and UE 1610 is in the coverage of eNB 1601 and running on a road 1606 across the coverage of eNBs 1601, 1602, 1604. UE 1610 is performing an emergency stop and is intending to transmit an "emergency stop" message to other V2X UEs in its proximity. The procedure for distributing the "emergency stop" message in the network may be as below:

Step 1: V2X UE 1610 transmits "emergency stop" message to eNB 1601, possibly together with its GPS coordinates, direction and/or speed.

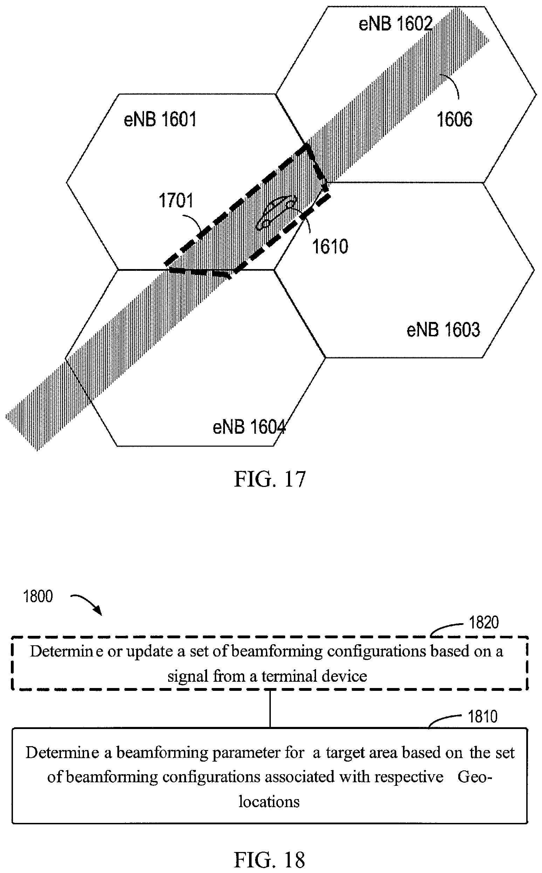

Step 2: eNB 1601 receives the message. eNB 1601 determines the radius of an affected area, for example based on type of the message (i.e., the eNB1 knows that it is a V2X message). Optionally, together with GPS coordinates of the UE 1610, eNB 1601 may determine that the circle area 1605 is the target geographical area, which covers areas served by eNBs 1601, 1602 and 1604. In another embodiment, alternatively or in addition, the eNB1601 may obtain content of the message as part of the assistance information. In this example, the eNB 1601 knows that the message is "emergency stop" from a vehicle UE 1610, and determines that the "beaming area" only needs to cover the road 1606. In a further embodiment, the eNB 1601 may also obtain information on the moving direction (showed by the arrow) of the UE 1610, and determines that only the road behind (not in front of) the transmitting UE will be impacted and are supposed to receive the message. Accordingly, the eNB 1601 may determine the "beaming area" as the area in dotted rectangle 1607 shown in FIG. 16. In another embodiment, the moving direction and speed information of transmitting UE 1610 may be unknown to the eNB 1601. For example, the V2X data may be obtained by the eNB 1601 at block 1510 of FIG. 15 from a MBMS-GW instead of a transmitting UE, and therefore, the eNB 1601 may determine the "beaming area" as the area in the dotted rectangle 1701 shown in FIG. 17. It is clear from these examples that, the accuracy in determining the target area depends on available assistance information.

Step 3: eNB 1601 transmits the "emergency stop" message to the determined "beam area" in its coverage with beamforming.

Embodiments of the present disclosure are not limited to any specific way for forming the beam towards the target area, and therefore examples provided below are just for illustration rather than limitation.

In FIG. 18, a schematic flow chart of a method 1800 for generating a beam towards a target area according to an embodiment of the present disclosure is illustrated. The method 1800 may be used by the network device 101 at block 1230 of method 1200 or block 1530 of method 1500 for generating a beam towards the target area determined at block 1220 or 1520 of method 1200 or 1500. However, the method 1800 is not limited to being used in association with the specific method 1200 or 1500, and instead it may be used in any scenario for generating a beam for a target area.

As shown in FIG. 18, at block 1810, the network device 101 may determine a beamforming parameter(s) for a target area based on a set of beamforming configurations associated with respective geo-locations around the network device 101.

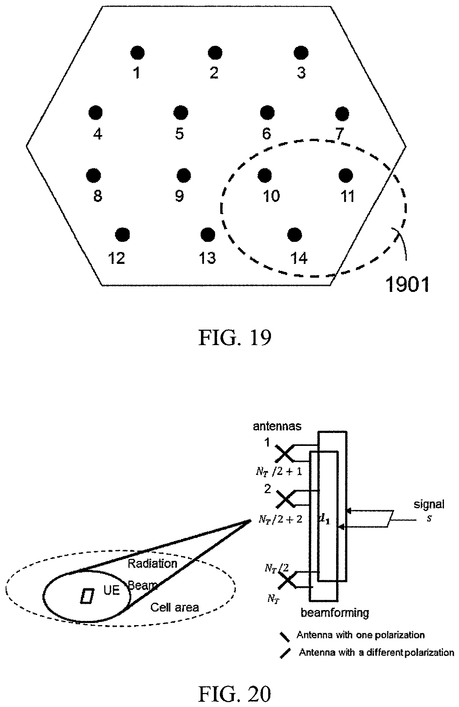

In one embodiment, the network device 101 may predetermine several geo-locations in its cell, and predetermine the set of beamforming configurations by determining a beamforming configuration for each of the predetermined geo-locations. In an example shown in FIG. 19, 14 geo-locations are predetermined in a cell, and the network device 101 may predetermine a beamforming parameter for each geo-location, as shown in Table I and Table II.

Table I. Example 1 of Beamforming configurations for respective geo-locations

| Geo-Location | GPS coordinators | $W_1$ |
|---|---|---|
| 1 | X1, Y1 | A1 |
| 2 | X2, Y2 | A2 |
| ... | ... | ... |

Table II. Example 2 of Beamforming configurations for respective geo-locations

| Geo-Location | GPS coordinators | UE's directional information |
|---|---|---|
| 1 | X1, Y1 | A1 |
| 2 | X2, Y2 | A2 |
| ... | ... | ... |

As shown in Table I, which is applicable to both TDD and FDD systems, the beamforming parameter/configuration for a geo-location may be a matrix $W_1$ which contains one or multiple precoding vectors which can be used to form one or multiple wideband beams to reach the UEs at the geo-location. In another example shown in Table II, which is applicable to a TDD system only, the beamforming parameter/configuration for a geo-location may be directional information of a terminal device which may indicate, for example, amplitude and phase of a signal received by a receiving antenna of the terminal device at the associated geo-location. The content of beamforming configurations/parameters may vary depending on an algorithm used by the network device for calculating/forming a beam.

Optionally, the network device 101 may store the predetermined beamforming configuration(s) or parameter(s) for the predetermined geo-locations in a Beamforming database, a look-up table, or a file. Embodiments are not limited to any specific way for storing these predetermined configurations. In some embodiments, the network device 101 may dynamically generate the set of beamforming configurations based on needs rather than storing/preconfiguring them.

In some embodiments, the set of beamforming configurations (e.g., the configurations shown in Table I or II, or stored in a database) may be updated by the network device 101 from time to time. For example, at block 1820 of FIG. 18, the network device 101 may determine or update the set of beamforming configurations based on a signal from a terminal device. The signal may be, but not limited to, a channel state information (CSI) feedback or a reference signal. For example, beamforming weights or precoders for a geo-location may be derived from CSI feedback reported by UEs which may or may not support V2X in the same zone/area. For TDD systems, beamforming weights or precoders for a geo-location may also be derived from measurements on uplink reference signals. A data base on the association between a UE geo-location and the precoder reported by the UE as part of CSI feedback or the directional information measured in the uplink in a TDD system may be pre-established and maintained at the network device. The data base may be used by network device to determine which zone or area the UE belongs to and what downlink beam should be used to send a data. Two examples for maintaining the beamforming configurations are provided below, however, those skilled in the art can appreciated that the beamforming configurations may be maintained in any suitable way.

**Example 1:**

This example is applicable to both FDD and TDD systems. The eNB initiates beamforming database for example as below:

- Some geo-locations are determined within the eNB's coverage area.
- For each geo-location, a matrix $W_1$ is calculated according to a position of the geo-location relative to eNB, e.g. distance, direction and etc.

The eNB may update the beamforming database as below:

- eNB can obtain geo-location of UEs via UE Location Reporting.

  - For the UEs located in the concerned geo-location, eNB transmits CSI reference signals (CSI-RS) periodically. Each CSI-RS signal is transmitted from one antenna port.
  - An UE is signaled about the CSI-RS configuration, measures the downlink channel state information (CSI) based on the received CSI-RS signals, and feedbacks the CSI. The CSI contains the UE direction information in terms of a precoding matrix $W = W_1$ where $W_1$ is a matrix containing one or multiple precoding vectors which can be used to form one or multiple wideband beams to reach the UE.

- eNB updates the beamforming database according to the CSI feedback from UE. Alternatively, the eNB may update the beamforming database as below:
- When performing LTE DL transmission with beamforming, eNB triggers UE to report CSI feedback. The eNB can reuse this CSI feedback together with UE geo-location information, to update the beamforming database.

**Example 2:**

This example is applicable to TDD systems only. The beamforming database stores directional information for each concerned geo-location. The UE's directional information is the received signal amplitude and phase at each receive antenna.
The eNB initiates beamforming database for example as below:

- Some geo-locations are determined within the eNB coverage.
- For each geo-location, UE's directional information is calculated according to its relative position to eNB, e.g. distance, direction and etc.

The eNB may update the beamforming database as below:

- eNB measures a UE's directional information by measuring the reference signals (e.g., sounding reference signals (SRS)) transmitted in the uplink by the UE in an interested geo-location. The directional information can be the received signal phase at each receive antenna.

- eNB updates the beamforming database according to the UE's directional information from UE together with UE geo-location information.

Based on the set of beamforming configurations (e.g., $W_1$ in Table I or directional information in Table II, or information in a beamforming database) for the respective geo-locations, the network device 101 may calculate the parameters to be used to generate a beam(s) covering a target "beaming area". For example, if the network device 101 wants to transmit data to the dotted circle area 1901(which may be determined for example by the network device 101 at block 1220 or block 1520 using method 1200 or 1500) shown in FIG. 19, the network device 101 may calculate, at block 1810 (or block 1230 of FIG. 12, or block 1530 of FIG. 15), a beamforming parameter for the area using the $W_1$ parameters in Table I associated with the geo-locations 10, 11 and 14 (possibly also 6, 7, 9, 13) shown in FIG. 19.

Embodiments of the present disclosure are not limited to any specific algorithm for generating a beam, but examples are provided below for illustration.

In one embodiment, the V2X data and its corresponding "beaming area" information is known to an eNB. The eNB generates one or multiple beams to cover the concerned "beaming area" according to the information in the beamforming database. Note that, in an embodiment, the eNB can transmit data via conventional broadcast without using any beam, if the "beaming area" is determined as covering the whole cell. To transmit different V2X data, regardless their "beaming areas" being overlapped or not, different beams may be used.

In one example, the beamforming database includes $W_1$ information and the eNB may generate a beam as

$$W_1 = \begin{bmatrix} D & 0 \\ 0 & D \end{bmatrix}$$

below FIG. 20, where it is assumed that and $D = [d_1]$ , i.e. $W_1$ contains a single beam. The signal to be transmitted is precoded by $W_1$ and the precoded signals are then transmitted over the antennas.

In another example, the beamforming database includes directional information, and the eNB may form one or multiple beams based on the measured directional information. For example, if the antennas are calibrated, the measured signal phase at each received antenna can be applied to the corresponding transmit antenna in the downlink to form a beam. Alternatively, the measured phase and amplitude at each antenna can be used to estimate the channel matrix $H_n$ of the downlink due to channel reciprocity and the downlink precoder matrix can be derived using a codebook. To cover all V2X UEs in the area, a common precoder may be derived from the phases and/or amplitudes associated with each respective geo-location in Table II and the common precoder may be used to form a beam.

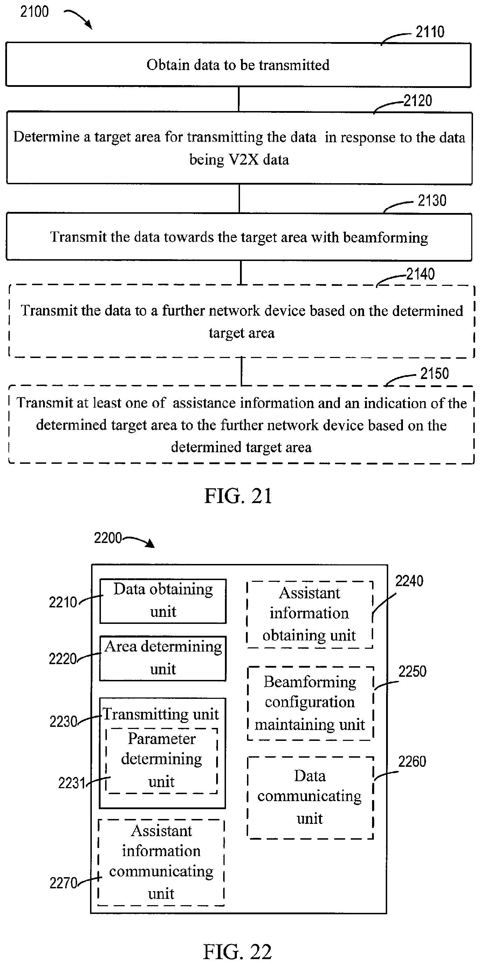

Reference is now made to FIG. 21 which shows another method 2100 according to an embodiment of the present disclosure. Like method 1200, 1500 and 1800, the method 2100 may be implemented by a network device (e.g., the network device 101 shown in FIG. 1).

The method 2100 may be used, for example, in some embodiments, where an eNB receives V2X data from a vehicle/pedestrian UE in its coverage and determines that the data should be received by UEs in a coverage of other neighboring eNB(s), the eNB then transmits the V2X data and/or the assistance information to the concerned neighboring eNB(s), for the neighboring eNB(s) to transmit the V2X data to the UEs in its coverage.

As shown in FIG. 21, the method 2100 includes blocks 2110-2150. Operations of the blocks 2110-2130 may be the same as that of blocks 1210-1230 or 1510-1530, and therefore details will not be repeated. Operations of blocks 2140 and 2150 will be described below.

At block 2140, the network device 101 may transmit the data to a further network device based on the determined target area. For example, as shown in FIG. 16, the eNB 1601 may determine at block 2120 that the target "beaming area" of a V2X message covers cells of both eNB 1601 and eNB 1604. Then the eNB 1601 may send the V2X message to the eNB 1604. This may enable the eNB 1604 to distribute the V2X message to part of the "beam area" in its coverage (e.g., using beamforming as described with reference to FIG. 18).

In another embodiment, alternatively or in addition, at block 2150, the network device 101 may transmit at least one of the assistance information and an indication of the determined target area to the further network device based on the determined target area.

FIG. 22 illustrates a schematic block diagram of an apparatus 2200 implemented in/as at least part of a network device, for example, the network device 101 shown in FIG. 1. The apparatus 2200 is operable to carry out the example method 1200, 1500, 1800, and/or 2100 described with reference to FIG. 12, 15, 18 and 21, and possibly any other processes or methods. It is also to be understood that the methods 1200, 1500, 1800, and 2100 are not necessarily carried out by the apparatus 2200. At least some blocks of the methods 1200, 1500, 1800, and 2100 can be performed by one or more other entities.

As illustrated in FIG. 22, the apparatus 2200 includes a data obtaining unit 2210, an area determining unit 2220 and a transmitting unit 2230. The data obtaining unit 2210 is configured to obtain data to be transmitted. The data obtaining unit 2210 may obtain the data in various way and/or from various source as described with reference to block 1210 of method 1200, and details will not be repeated. The area determining unit 2220 may be configured to determine a target area for transmitting the data at least based on a type of the data. In one embodiment, the area determining unit 2220 may be configured to determine a target area for transmitting the data in response to determining that the data is V2X data. The transmitting unit 2230 may be configured to transmit the data towards the target area with beamforming.

In one embodiment, the data obtaining unit 2210, the area determining unit 2220 and the transmitting unit 2230 may be configured to perform functions/operations described with reference to blocks 1210 - 1230 in FIG. 12 or blocks 1510-1530 in FIG. 15 or blocks 2110-2130 in FIG. 21 respectively. Therefore, descriptions with respect to the data obtaining, the target area determining, beam forming, and data transmitting provided with reference to FIGs. 12, 15, and 21 also apply here and details will not be repeated for simplicity.

In an embodiment, the apparatus 2200 may optionally comprise an assistance information obtaining unit 2240, configured to obtain assistance information. Descriptions with respect to the assistance information provided with reference to FIG. 12 also apply here.

Optionally, in another embodiment, the transmitting unit 2230 may include a parameter determining unit 2231, configured to determine a beamforming parameter for the target area based on a set of beamforming configurations associated with respective geo-locations around the network device. In still another embodiment, the apparatus 2200 may optionally comprise a beamforming configuration maintaining unit 2250, configured to determine or update the set of beamforming configurations based on a signal from a terminal device.

In some embodiments, the apparatus 220 may further comprise a data communicating unit 2260, configured to transmit the data to a further network device based on the determined target area. Alternatively or in addition, in another embodiment, the apparatus 220 may comprise an assistance information communicating unit 2270, configured to transmit at least one of the assistance information and an indication of the determined target area to the further network device based on the determined target area.

In some embodiments, the apparatus 2200 may comprise other unit not shown in FIG. 22, configured for other functions.

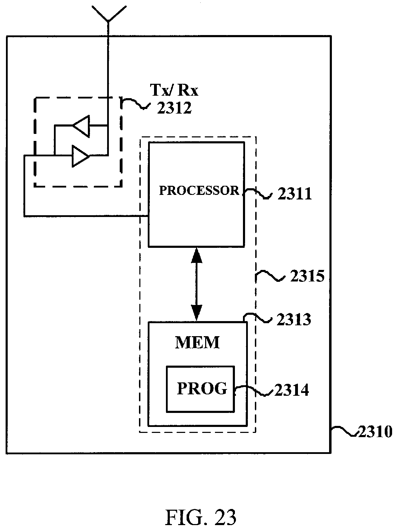

FIG. 23 illustrates a simplified block diagram of an apparatus 2310 that may be embodied in/as at least part of a network device, e.g., the network device 101 shown in FIG. 1.

The apparatus 2310 may include at least one processor 2311, such as a data processor (DP) and at least one memory (MEM) 2312 coupled to the processor 2311. The apparatus 2310 may further include a transmitter TX and receiver RX 2313 coupled to the processor 2311. The MEM 2312 may be non-transitory machine/ processor/ computer readable storage medium and it may store a program (PROG) 2314. The PROG 2314 may include instructions that, when executed on the associated processor 611, enable the apparatus 2310 to operate in accordance with the embodiments of the present disclosure, for example to perform the method 1200, 1500, 1800 and/or 1200. A combination of the at least one processor 2311 and the at least one MEM 2312 may form processing means 2315 adapted to implement various embodiments of the present disclosure.

Various embodiments of the present disclosure may be implemented by computer program executable by one or more of the processors 2311, software, firmware, hardware or in a combination thereof.

The MEM 2312 may be of any type suitable to the local technical environment and may be implemented using any suitable data storage technology, such as semiconductor based memory terminal devices, magnetic memory terminal devices and systems, optical memory terminal devices and systems, fixed memory and removable memory, as non-limiting examples.

The processor 2311 may be of any type suitable to the local technical environment, and may include one or more of general purpose computers, special purpose computers, microprocessors, digital signal processors DSPs and processors based on multicore processor architecture, as non-limiting examples.

Although some of the above description is made in the context of a LTE or LTE-A wireless communication network, it should not be construed as limiting the spirit and scope of the present disclosure. The principle and concept of the present disclosure may be more generally applicable to other scenarios.

In addition, the present disclosure may also provide a memory containing the computer program as mentioned above, which includes machine-readable media and machine-readable transmission media. The machine-readable media may also be called computer-readable media, and may include machine-readable storage media, for example, magnetic disks, magnetic tape, optical disks, phase change memory, or an electronic memory terminal device like a random access memory (RAM), read only memory (ROM), flash memory devices, CD-ROM, DVD, Blue-ray disc and the like. The machine-readable transmission media may also be called a carrier, and may include, for example, electrical, optical, radio, acoustical or other form of propagated signals - such as carrier waves, infrared signals, and the like.

The techniques described herein may be implemented by various means so that an apparatus implementing one or more functions of a corresponding apparatus described with an embodiment includes not only prior art means, but also means for implementing the one or more functions of the corresponding apparatus described with the embodiment and it may include separate means for each separate function, or means that may be configured to perform two or more functions. For example, these techniques may be implemented in hardware (one or more apparatuses), firmware (one or more apparatuses), software (one or more modules or units), or combinations thereof. For a firmware or software, implementation may be made through modules or units (e.g., procedures, functions, and so on) that perform the functions described herein.

Example embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including hardware, software, firmware, and a combination thereof. For example, in one embodiment, each block of the block diagrams and flowchart illustrations, and combinations of blocks in the block diagrams and flowchart illustrations can be implemented by computer program instructions. These computer program instructions may be loaded onto a general purpose computer, special purpose computer, or other programmable data processing apparatus to produce a machine, such that the instructions which execute on the computer or other programmable data processing apparatus create means for implementing the functions specified in the flowchart block or blocks.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination. The protection scope of the disclosure is defined by the accompanying claims.

Some abbreviations used herein are listed below:

| | |
|---|---|
| CAM | Cooperative Awareness Message |
| CQI | channel quality indicator |
| CRS | cell specific reference signal |
| CSI | channel state information |
| CSR-RS | channel state information reference signal |
| DENM | Decentralized Environmental Notification Message |
| D2D | Device to device (communication) |
| DFT | Discrete Fourier Transform |
| DL | Downlink |
| DPI | Deep packet inspection |
| eNB | Evolved Node B |
| FDD | Frequency division duplex |
| LTE | Long Term Evolution |
| MBMS | Multimedia Broadcast Multicast Services |
| MBSFN | Multicast-Broadcast Single-Frequency Network |
| MIMO | multiple-input multiple-output |
| MISO | multiple input and single output |
| PMI | precoder matrix indicator |
| RI | rank indicator |
| SCPTM | Single Cell Point-To-Multipoint |
| SRC | sounding reference signal |
| TDD | Time division duplex |
| TMGI | Temporary Mobile Group Identity |
| UE | User equipment |
| UL | Uplink |
| V2I | Vehicle to infrastructure (communication) |
| V2P | Vehicle to pedestrian (communication) |
| V2V | Vehicle to vehicle (communication) |
| V2X | Vehicle to everything (communication) |

**Claims**

1. A method (1200, 1500, 2100) performed by a network device (101), comprising:

   receiving (1210, 1510, 2100) data to be transmitted from a terminal device;
   receiving (1511) assistance information from the terminal device, wherein the assistance information indicates a geo-location of the terminal device from which the data to be transmitted is received; and
   determining the data type of the data to be transmitted, wherein in response to determining that the data type is Vehicle to everything, V2X, data:

       determining a first target area for transmitting the data based on the geo-location indicated by the assistance information, wherein the first target area is a geographical area having the terminal device from which the V2X data is received at the center, and
       transmitting (1230, 1530, 2130) the V2X data towards the first target area with beamforming; and in response to determining that the data type is not V2X data:

       determining a second target area for transmitting the data, wherein the second target area is different to the first target area, and
       transmitting (1230, 1530, 2130) the data towards the second target area with beamforming.

2. The method (1200, 1500, 2100) according to Claim 1, wherein receiving (1210, 1510, 2100) data to be transmitted from the terminal device comprises at least one of:

   receiving the data from a terminal device via a cellular communication interface; and
   receiving the data from a terminal device via a device to device communication interface.

3. The method (1200, 1500, 2100) according to Claim 1 or 2, wherein the assistance information further indicates at least one of:

   a moving speed of the terminal device from which the data is obtained;
   a moving direction of the terminal device from which the data is obtained;
   a geographical area to which the data is to be transmitted;
   map information of a geographical area around the network device,
   information on a network deployment around the network device, and
   information on content of the data.

4. The method (1200, 1500, 2100) according to any of Claims 1-3, wherein said transmitting (1230, 1530, 2130) the data to the target area with beamforming comprises transmitting the data to the target area with beamforming by using at least one of:

   a cellular communication interface; and
   a device to device communication interface.

5. The method (1200, 1500, 2100) according to Claim 4, wherein said transmitting (1230, 1530, 2130) the data to the target area with beamforming by using a cellular communication interface comprises:
   transmitting the data to the target area by using a Multimedia Broadcast Multicast Service, MBMS, Multicast Broadcast Single Frequency Network, MBSFN, or single cell point to multi-points, SCPTM, scheme.

6. The method (1200, 1500, 2100) according to any of Claims 1-5, wherein transmitting (1230, 1530, 2130) the data to the target area with beamforming comprises:
   determining (1810) a beamforming parameter for the target area based on a set of beamforming configurations associated with respective geo-locations.

7. The method (1200, 1500, 2100) according to Claim 6, wherein a beamforming configuration of the set of beamforming configurations indicates at least one of:

   a beamforming matrix for the respective geo-location, and
   directional information of a terminal device located at the respective geo-location.

8. The method (1200, 1500, 2100) according to Claim 6 or 7, further comprising:

   determining (1820) or updating the set of beamforming configurations based on a signal from a terminal device.

9. The method (1200, 1500, 2100) according to any of Claims 1-8, further comprising:
   transmitting (2140) the data to a further network device based on the determined target area.

10. The method (1200, 1500, 2100) according to any of Claims 1 to 9, further comprising:
    transmitting (2150) at least one of assistance information and an indication of the determined target area to a further network device based on the determined target area.

11. An apparatus (2310) in a network device (101), the apparatus (2310) comprising a processor (2311) and a memory (2312), said memory (2312) containing instructions executable by said processor (2311) whereby said apparatus (2310) is operative to carry out the method according to any one of claims 1-10.


**Patentansprüche**

1. Verfahren (1200, 1500, 2100), das von einer Netzwerkvorrichtung (101) durchgeführt wird und umfasst:

   Empfangen (1210, 1510, 2100) von Daten, die gesendet werden sollen, von einer Endgerätevorrichtung;
   Empfangen (1511) von Hilfsinformationen von der Endgerätevorrichtung, wobei die Hilfsinformationen eine geografische Position der Endgerätevorrichtung anzeigen, von welcher die zu sendenden Daten empfangen werden; und
   Bestimmen des Datentyps der zu sendenden Daten,
   wobei in Reaktion auf ein Bestimmen, dass es sich bei dem Datentyp um Verkehrsvernetzungs-,V2X-,Daten handelt:

   Bestimmen eines ersten Zielgebiets zum Senden der Daten basierend auf der geografischen Position, die durch die Hilfsinformationen angezeigt wird, wobei das erste Zielgebiet ein geografisches Gebiet mit der Endgerätevorrichtung ist, von welcher die V2X-Daten in der Zentrale empfangen werden, und
   Senden (1230, 1530, 2130) der V2X-Daten mit Strahlformung zum ersten Zielgebiet; und

   in Reaktion auf ein Bestimmen, dass es sich bei dem Datentyp nicht um V2X-Daten handelt:

   Bestimmen eines zweiten Zielgebiets zum Senden der Daten, wobei das zweite Zielgebiet vom ersten Zielgebiet verschieden ist, und
   Senden (1230, 1530, 2130) der Daten mit Strahlformung zum zweiten Zielgebiet.

2. Verfahren (1200, 1500, 2100) nach Anspruch 1, wobei das Empfangen (1210, 1510, 2100) der zu sendenden Daten von der Endgerätevorrichtung mindestens eines umfasst von:

   Empfangen der Daten von einer Endgerätevorrichtung über eine Funkzellenkommunikationsschnittstelle; und
   Empfangen der Daten von einer Endgerätevorrichtung über eine Vorrichtung-zu-Vorrichtung-Kommunikationsschnittstelle.

3. Verfahren (1200, 1500, 2100) nach Anspruch 1 oder 2, wobei die Hilfsinformationen ferner mindestens eines anzeigen von:

   einer Bewegungsgeschwindigkeit der Endgerätevorrichtung, von welcher die Daten erhalten werden;
   einer Bewegungsrichtung der Endgerätevorrichtung, von welcher die Daten erhalten werden;
   einem geografischen Gebiet, in welches die Daten gesendet werden sollen;
   Karteninformationen eines geografischen Gebiets um die Netzwerkvorrichtung,
   Informationen über eine Netzwerkbereitstellung um die Netzwerkvorrichtung, und
   Informationen über Inhalt der Daten.

4. Verfahren (1200, 1500, 2100) nach einem der Ansprüche 1 bis 3, wobei das Senden (1230, 1530, 2130) der Daten mit Strahlformung in das Zielgebiet ein Senden der Daten mit Strahlformung in das Zielgebiet durch Verwenden von mindestens einem umfasst von:

einer Funkzellenkommunikationsschnittstelle; und
einer Vorrichtung-zu-Vorrichtung-Kommunikationsschnittstelle.

5. Verfahren (1200, 1500, 2100) nach Anspruch 4, wobei das Senden (1230, 1530, 2130) der Daten mit Strahlformung in das Zielgebiet durch Verwenden einer Funkzellenkommunikationsschnittstelle umfasst:
Senden der Daten durch Verwenden eines Multimedia-Broadcast-Multicast-Diensts, MBMS, eines Multicast-Broadcast-Einzelfrequenznetzwerks, MBSFN, oder eines Einzelzellen-Punkt-zu-Mehrpunkt-,SCPTM-,Schemas.

6. Verfahren (1200, 1500, 2100) nach einem der Ansprüche 1 bis 5, wobei das Senden (1230, 1530, 2130) der Daten mit Strahlformung in das Zielgebiet umfasst:
Bestimmen (1810) eines Strahlformungsparameters für das Zielgebiet basierend auf einem Satz von Strahlformungskonfigurationen, der mit jeweiligen geografischen Positionen assoziiert ist.

7. Verfahren (1200, 1500, 2100) nach Anspruch 6, wobei eine Strahlformungskonfiguration des Satzes von Strahlformungskonfigurationen mindestens eine umfasst von:

einer Strahlformungsmatrix für die jeweilige geografische Position, und
Richtungsinformationen einer Endgerätevorrichtung, die sich in der jeweiligen geografischen Position befindet.

8. Verfahren (1200, 1500, 2100) nach Anspruch 6 oder 7, ferner umfassend:
Bestimmen (1820) oder Aktualisieren des Satzes von Strahlformungskonfigurationen basierend auf einem Signal von der Endgerätevorrichtung.

9. Verfahren (1200, 1500, 2100) nach einem der Ansprüche 1 bis 8, ferner umfassend:
Senden (2140) der Daten basierend auf dem bestimmten Zielgebiet an eine weitere Netzwerkvorrichtung.

10. Verfahren (1200, 1500, 2100) nach einem der Ansprüche 1 bis 9, ferner umfassend:
Senden (2150) mindestens einer der Hilfsinformationen und einer Anzeige des bestimmten Zielgebiets basierend auf dem bestimmten Zielgebiet an eine weitere Netzwerkvorrichtung.

11. Einrichtung (2310) in einer Netzwerkvorrichtung (101), wobei die Einrichtung (2310) einen Prozessor (2311) und einen Speicher (2312) umfasst, wobei der Speicher (2312) Anweisungen enthält, die vom Prozessor (2311) ausgeführt werden können, wodurch die Einrichtung (2310) zum Durchführen des Verfahrens nach einem der Ansprüche 1 bis 10 ausgelegt ist.

## Revendications

1. Procédé (1200, 1500, 2100) réalisé par un dispositif de réseau (101), comprenant :

la réception (1210, 1510, 2100) de données à transmettre depuis un dispositif terminal ;
la réception (1511) d'informations d'assistance depuis le dispositif terminal, dans lequel les informations d'assistance indiquent une géolocalisation du dispositif terminal depuis lequel les données à transmettre sont reçues ; et
la détermination du type de données des données à transmettre, dans lequel
en réponse à la détermination que le type de données est des données de véhicule à tout récepteur, V2X :

la détermination d'une première zone cible pour transmettre les données sur la base de la géolocalisation indiquée par les informations d'assistance, dans lequel la première zone cible est une zone géographique au centre de laquelle se trouve le dispositif terminal depuis lequel les données V2X sont reçues, et
la transmission (1230, 1530, 2130) des données V2X vers la première zone cible avec une formation de faisceau ; et

en réponse à la détermination que le type de données n'est pas des données V2X :

la détermination d'une deuxième zone cible pour transmettre les données, dans lequel la deuxième zone cible est différente de la première zone cible, et
la transmission (1230, 1530, 2130) des données vers la deuxième zone cible avec une formation de faisceau.

2. Procédé (1200, 1500, 2100) selon la revendication 1, dans lequel la réception (1210, 1510, 2100) des données à transmettre depuis le dispositif terminal comprend au moins l'une parmi :

la réception des données depuis un dispositif terminal via une interface de communication cellulaire ; et
la réception des données depuis un dispositif terminal via une interface de communication de dispositif à dispositif.

3. Procédé (1200, 1500, 2100) selon la revendication 1 ou 2, dans lequel les informations d'assistance indiquent en outre au moins l'une parmi :

une vitesse de déplacement du dispositif terminal depuis lequel les données sont obtenues ;
une direction de déplacement du dispositif terminal depuis lequel les données sont obtenues ;
une zone géographique vers laquelle les données doivent être transmises ;
des informations de carte d'une zone géographique autour du dispositif de réseau ;
des informations sur un déploiement de réseau autour du dispositif de réseau ; et
des informations sur un contenu des données.

4. Procédé (1200, 1500, 2100) selon l'une quelconque des revendications 1 à 3, dans lequel ladite transmission (1230, 1530, 2130) des données à la zone cible avec une formation de faisceau comprend la transmission des données à la zone cible avec une formation de faisceau en utilisant au moins l'une parmi :

une interface de communication cellulaire ; et
une interface de communication de dispositif à dispositif.

5. Procédé (1200, 1500, 2100) selon la revendication 4, dans lequel ladite transmission (1230, 1530, 2130) des données à la zone cible avec une formation de faisceau en utilisant une interface de communication cellulaire comprend :
la transmission des données à la zone cible en utilisant un schéma de service de diffusion-multidiffusion multimédia, MBMS, de réseau de fréquence unique de multidiffusion-diffusion, MBSFN, ou de point à multipoint à cellule unique, SCPTM.

6. Procédé (1200, 1500, 2100) selon l'une quelconque des revendications 1 à 5, dans lequel la transmission (1230, 1530, 2130) des données à la zone cible avec une formation de faisceau comprend :
la détermination (1810) d'un paramètre de formation de faisceau pour la zone cible sur la base d'un ensemble de configurations de formation de faisceau associées à des géolocalisations respectives.

7. Procédé (1200, 1500, 2100) selon la revendication 6, dans lequel une configuration de formation de faisceau de l'ensemble de configurations de formation de faisceau indique au moins l'une parmi :

une matrice de formation de faisceau pour la géolocalisation respective, et
des informations directionnelles d'un dispositif terminal situé à la géolocalisation respective.

8. Procédé (1200, 1500, 2100) selon la revendication 6 ou 7, comprenant en outre :
la détermination (1820) ou la mise à jour de l'ensemble de configurations de formation de faisceau sur la base d'un signal provenant d'un dispositif terminal.

9. Procédé (1200, 1500, 2100) selon l'une quelconque des revendications 1 à 8, comprenant en outre :
la transmission (2140) des données à un autre dispositif de réseau sur la base de la zone cible déterminée.

10. Procédé (1200, 1500, 2100) selon l'une quelconque des revendications 1 à 9, comprenant en outre :
la transmission (2150) d'au moins l'une parmi des informations d'assistance et une indication de la zone cible déterminée à un autre dispositif de réseau sur la base de la zone cible déterminée.

11. Appareil (2310) dans un dispositif de réseau (101), l'appareil (2310) comprenant un processeur (2311) et une mémoire (2312), ladite mémoire (2312) contenant des instructions exécutables par ledit processeur (2311) de telle manière que ledit appareil (2310) soit fonctionnel pour réaliser le procédé selon l'une quelconque des revendications 1 à 10.

FIG. 1

FIG. 2

FIG. 3

FIG. 4

FIG. 5

FIG. 6

FIG. 7

FIG. 8

FIG. 9

FIG. 10

FIG. 11

1200

| 1210 |
| --- |
| Obtain data to be transmitted |

| 1220 |
| --- |
| Determine a target area for transmitting the data in response to the data being V2X data |

| 1230 |
| --- |
| Transmit the data towards the target area with beamforming |

FIG. 12

1321

1301

1302

1322

FIG. 13

1421

1401

1402

1410

1422

FIG. 14

1500

1510

Obtain data to be transmitted

1511

Obtain assistance information

1520

Determine a target area for transmitting the data based on the assistance information in response to the data being V2X data

1530

Transmit the data towards the target area with beamforming

FIG. 15

eNB 1602

eNB 1601

1606

1607

1610

1605

eNB 1603

eNB 1604

FIG. 16

eNB 1602

eNB 1601

1606

1701

1610

eNB 1603

eNB 1604

FIG. 17

1800

1820
Determine or update a set of beamforming configurations based on a signal from a terminal device

1810
Determine a beamforming parameter for a target area based on the set of beamforming configurations associated with respective Geo-locations

FIG. 18

FIG. 19

FIG. 20

2100

2110
Obtain data to be transmitted

2120
Determine a target area for transmitting the data in response to the data being V2X data

2130
Transmit the data towards the target area with beamforming

2140
Transmit the data to a further network device based on the determined target area

2150
Transmit at least one of assistance information and an indication of the determined target area to the further network device based on the determined target area

FIG. 21

2200

2210 Data obtaining unit

2220 Area determining unit

2230 Transmitting unit

2231 Parameter determining unit

2270 Assistant information communicating unit

2240 Assistant information obtaining unit

2250 Beamforming configuration maintaining unit

2260 Data communicating unit

FIG. 22

Tx/ Rx
2312

PROCESSOR 2311

2315

2313

MEM

PROG 2314

2310

FIG. 23

**EP 3 556 160 B1**

**Patent documents cited in the description**

- EP 2887560 A

**Non-patent literature cited in the description**

- Study on architecture enhancements for LTE support of V2X services. *3GPP TR 23.785 V14.0.0*
- Study on LTE-based V2X Services. *3GPP TR 36.885 V14.0.0*
- Report from LTE Break-Out Session (V2V, V2X, FeD2D, LATRED). *3GPP TSG-RAN WG2 Meeting #95 Kaohsiung,* 10 October 2016